# EUROPEAN PATENT APPLICATION

(11) **EP 3 417 699 A2**
(43) Date of publication of application: **26.12.2018**
(21) Application number: 18173968.1
(22) Date of filing: 24.05.2018
(51) Int. Cl.: A01J 25/00, B65D 85/76

(54) **A METHOD FOR THE MANUFACTURE OF A DAIRY PRODUCT, AND A PACKAGED DAIRY PRODUCT**

(30) Priority: 02.06.2017 EP 17174252
(71) Applicant: Danapak Flexibles A/S, 4200 Slagelse (DK)
(72) Inventor: FOGTMANN, Torben, 5800 Nyborg (DK); CHRISTENSEN, Lars, 4200 Slagelse (DK); BRØDSGAARD, Ole, 5700 Svendborg (DK)
(74) Representative: AWA Denmark A/S

(57) **Abstract**

A method for the manufacture of a packaged dairy product, specifically white cheese, comprises the steps of: introducing a dairy product substance into a container through an opening of the container, subsequently attaching a peripheral portion of a membrane to the container so as to suspend the membrane above the dairy product substance, and dosing a solid substance onto a top surface of the membrane so that the membrane holds the solid substance at a distance from the dairy product substance in the container. A packaged dairy product, specifically packaged white cheese, comprises a container with an opening, a detachable lid covering and sealing the opening, a dairy product packaged inside the container, and a membrane positioned inside the container, a peripheral portion of the membrane being attached to the container so that the membrane is suspended above the dairy product. A method for the manufacture of a weldable membrane and a weldable membrane for use in the method and in the packaged dairy product.

## Description

### Field of the invention

The present invention relates to packaging, specifically packaging of food products, more specifically dairy products, such as white cheese. More specifically, in a first aspect the invention relates to a method for the manufacture of a packaged dairy product, in a second aspect to a packaged dairy product, in a third aspect to a method for manufacture of a membrane for use in the first and second aspects, and in a fourth aspect to a membrane for use in the first and second aspects.

### Background of the invention

A variety of methods for producing packaged dairy products, specifically acidified cheeses, such as white cheeses, including Feta cheeses or like salad cheeses, is known in the art.

A first known such method for the manufacture of white cheese, specifically Feta cheese, involves introducing a coagulatable and acidifiable dairy product substance comprising milk, cheese culture and rennet through an upper opening into a container, which comprises a sidewall portion, a bottom portion and an open top comprising the opening. The container is cup-shaped or tray-shaped and is positioned in an upright position so that the dairy product substance is positioned at a bottom of the container after introduction. The container is left until said substance has finished an acidification process. The acidification is finished when the pH value of the dairy product substance is approximately 4.8. When acidification is completed, a liquid, mainly water, is released from said substance, and the remaining parts of the substance are somewhat solidified to form the cheese. Subsequently, a solid substance, specifically salt (NaCI), is dosed into the container through the container's opening to be dissolved in the liquid released from the dairy product substance, whereby the cheese is salted. The container is then closed with a lid and is ready for transport and sale. The solid substance should not be dosed into the dairy product substance before the acidification process is finished, since premature salting will prevent the culture from developing and thereby stop the acidification process and destroy the cheese. Even small amounts of salt added prematurely to the dairy product substance may destroy the cheese. This first method involves a long processing time since each container has to be left for approximately 24 hours for the acidification process to finish before the solid substance can be added and the container can be sealed.

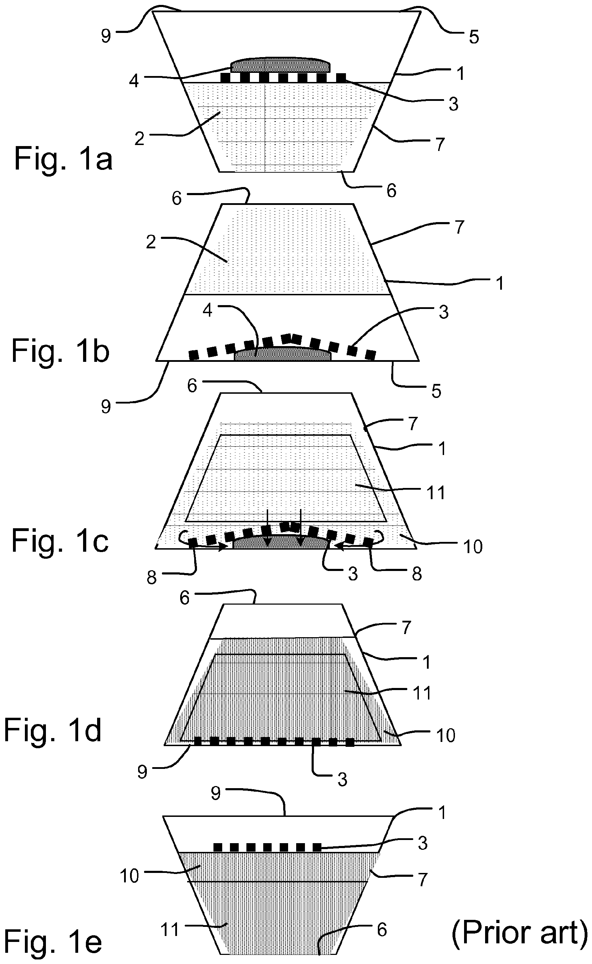

Method steps of a second known such method are schematically illustrated in Figs 1a to 1e. In Fig. 1a a coagulatable dairy product substance 2 is introduced into a container 1 through an opening 5 at a top end of the container 1, where it is left for approximately 20 minutes before said substance has coagulated sufficiently to allow for a liquid-permeable membrane 3 to be positioned on a top surface of the coagulated substance 2. Solid substance 4 in the form of salt, NaCI, is then dosed onto a top surface of said membrane 3, and the container 1 is sealed with a lid 9. The purpose of dosing the salt 4 onto the membrane 3 is to separate the salt 4 from the dairy product substance 2 until the acidification process is complete. Similar to in the above first method, the container 1 is cup-shaped or tray-shaped and comprises a bottom portion 6 and a sidewall portion 7. The container 1 is positioned in the upright position shown in Fig. 1a during these first method steps. As is illustrated in Fig. 1b, the container 1 is subsequently turned upside down, whereby the salt 4 and the permeable membrane 3 fall down towards the lid 9 to eventually abut the lid 9, whilst the coagulated dairy product substance 4 remains in the position where it coagulated in the container since it will adhere to the sidewall portion 7 and the bottom portion 6 after coagulation. The coagulated dairy product substance 2 is thus positioned at a distance from the solid substance 4 and the membrane 3 in the container 1. Then, as is shown in Fig. 1c, when the acidification of the dairy product substance 2 is approximately finished (the pH value being close to 4.8), liquid 10 is released from the dairy product substance 2 so that both the liquid 10 and the now acidified dairy product substance 11 fall down towards the lid 9. The liquid 10 (mainly water) then penetrates the permeable membrane 3 and/or sieves or flows between the peripheral portion 8 of the membrane 3 and the sidewall portion 7, see the arrows in Fig. 1c, whereby the liquid 10 dissolves the salt 4. The dissolved salt will then propagate or diffuse from beneath the membrane 3 in directions opposite to those illustrated by the arrows in Fig. 1c to enter into the acidified dairy product 11, which will then be salted. Fig. 1d shows the salted, acidified dairy product 11 and the salted liquid 10 in the container 1. The container 1 is then turned or rotated back to its original upright position as illustrated in Fig. 1e which may further distribute the salt in the liquid 10 and the acidified dairy product 11. Hereby, a homogeneous acidified dairy product or cheese 11 may potentially be arrived at. However, when the salt 4 is dosed onto the membrane 3 as illustrated in Fig. 1a, the weight of the salt 4 may somewhat push the membrane 3 down into the dairy product substance even though it has coagulated. Also, the membrane 3 may be somewhat misplaced when positioned freely in the container 1, both during positioning of the membrane 3 and when the container 1 is rotated. Therefore, there is a risk that some of the salt 4 will come into contact with the coagulated dairy product substance 2. This may stop the acidification process too early at least in some areas, thus resulting in a non-uniform cheese with areas with different pH values. Also, although significantly faster than the above first method, it is necessary to wait with positioning of the membrane 3, dosing of the salt 4 and attachment of the sealing lid 9 until the dairy product substance 2 has coagulated, which usually takes about 20 minutes.

A third, not illustrated, known method is similar to the second method described above. However, the container 1 is not turned as shown in Figs 1b and 1e. Instead, when the liquid 10 is released, it flows or propagates to the salt 4 at the top of the membrane 3 when acidification is complete. In this method some liquid from the coagulated dairy product substance may penetrate the permeable membrane 3 and dissolve some of the salt 4 before acidification has completed. The resulting salted liquid may then diffuse back through the membrane 3 into the not fully acidified dairy product substance 2 and, similar to as described above, stop the acidification process too early at least in some areas, thus resulting in a non-uniform cheese with areas with different pH values. Also, this method has the described drawback related to the possible misplacement of the membrane 3 in the container 1.

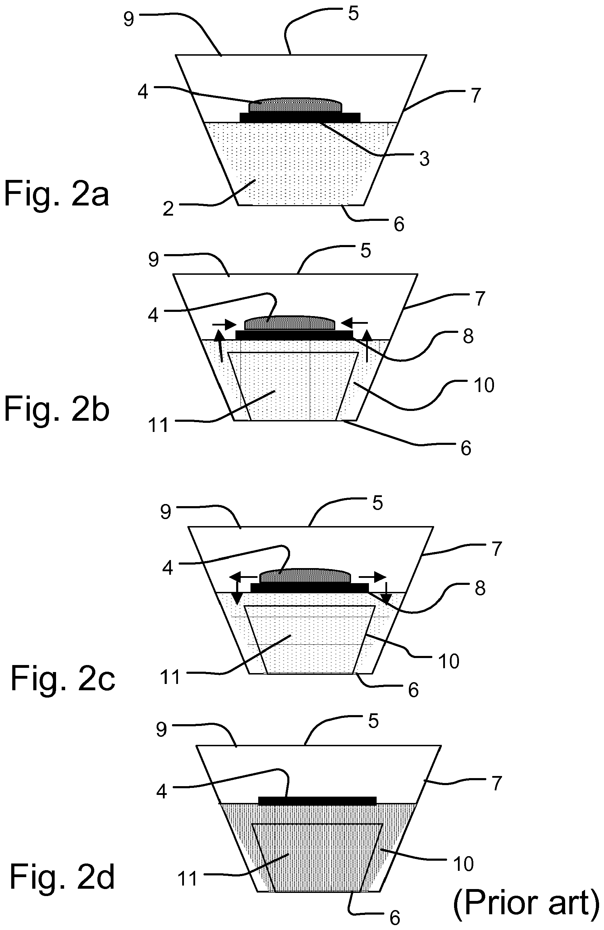

WO 2008017309 A1 discloses a fourth prior art method, which is illustrated in Figs 2a to 2d. This fourth method is generally similar to the third method described above, except for the differences described in the following. The step illustrated in Fig. 2a corresponds to that described above in relation to Fig. 1a, with the exception that the membrane 3 is a liquid-impermeable membrane 3. As is illustrated with the arrows in Fig. 2b, when the acidification process is almost complete, the liquid 10, which is released from the dairy product substance 2, will only rise up between the peripheral portion 8 and the sidewall portion 7 of the container 1, and not through the membrane 3 since the membrane 3 is liquid-impermeable. The resulting salted liquid 10 will then flow or diffuse in the opposite direction of the arrows shown in Fig. 2c to salt the coagulated dairy product substance 11. Since the membrane 3 is liquid-impermeable and positioned on the top surface of the dairy product substance 2, liquid can only reach the dairy product substance 2 around the peripheral portion 8 of the membrane 3, thus to some degree potentially alleviating the problem of the third method described above where liquid may penetrate the permeable membrane 3 with premature salting of the cheese as a consequence. However, the other problems described in relation to the third method remain, and error rates related to premature salting of up to 20 or 30 percent of a batch of packaged dairy products are not uncommon in the fourth method. Another drawback is that liquid-impermeable membranes are usually made from unsustainable material, typically a plastics or polymer material, such as polypropylene, which is not reused, is made from non-renewable resources, is slowly degradable and thus overall relatively damaging on the environment, especially compared to liquid-permeable membranes, such as paper, which usually does not have these drawbacks. Also, the material costs of liquid-impermeable membranes are typically several times those of liquid-permeable membranes.

### Summary of the invention

On this background it is the object of the present invention to solve or alleviate one or more of the above problems of the prior art.

This and further objects may be achieved according to the first aspect of the invention with a method for the manufacture of a packaged dairy product, specifically white cheese, comprising the steps of:
introducing a dairy product substance into a container through an opening of the container,
subsequently attaching a peripheral portion of a membrane to the container so as to suspend the membrane above the dairy product substance, and
dosing a solid substance onto a top surface of the membrane so that the membrane holds the solid substance at a distance from the dairy product substance in the container.

In the present specification, terms such as "dairy product" and "cheese" comprise dairy products or milk-based products substantially based on dairy or milk ingredients, but they also comprise dairy products or milk-based products based on dairy or milk substances, where one or more of the dairy or milk substances have been substituted by one or more non-dairy substances, e.g. cheese in which some or all of the milk fat or butterfat has been substituted with oil, such as vegetable oil.

With the method according to the first aspect of the invention, it is ensured that the solid substance substantially does not come into contact with the dairy product substance until it is desired that they do come into contact when the container is potentially subsequently moved, turned or rotated. Specifically, the problems associated with a wrongly positioned membrane in the above described second, third and fourth prior art methods are alleviated since the membrane is attached to the container. Furthermore, since the membrane can be kept from contacting the dairy product substance until such contact is desired, i.e. typically after acidification of the dairy product substance, the problems associated with the contact between the membrane and the dairy product substance in the second, third and fourth methods are alleviated. Thus, a significantly increased security in the method is achieved compared to those prior art methods. The error rates due to too early salting of the dairy product substance are significantly decreased and can, in practice, be close to zero. Since the membrane is attached to the container, it is ensured that the membrane is not wrongly positioned and does not move after positioning. Also, processing time may be significantly reduced since the steps of introduction of the membrane, attachment of the membrane in the container and dosing of the solid substance can be carried out immediately or very quickly after each other, and the container's opening can be immediately closed and sealed with a lid after dosing of the solid substance. Thus, there is no need, as in the above first known method, to keep the container open until acidification has completed and only then dose the salt. Similarly, there is no need to wait until the substance has coagulated before positioning of the membrane in the container as in the second, third and fourth known methods. The dairy product substance can thus be packaged very quickly compared to the prior art methods and left or stored to coagulate and acidify within the closed container. After acidification and release of liquid the packaged dairy product can then be shaken, turned, rotated or otherwise moved to bring the solid substance dosed on the membrane into contact with the released liquid so as to dissolve the solid substance and thereby bring it into contact with the acidified dairy product substance, e.g. to salt the substance. During such movement the liquid may propagate to the solid substance on top of the membrane through the membrane itself, if the membrane is liquid-permeable, or along a sidewall portion of the container, between the sidewall portion and the peripheral portion of the membrane. Thus, referring to the above explanation of the prior art, the membrane can be liquid-permeable and thus be manufactured from a liquid-permeable material that is more environmentally friendly than liquid-impermeable membranes. At the same time, liquid may penetrate the membrane when the container is moved to bring the liquid into contact with the solid substance while avoiding the drawbacks in the prior art related to using liquid-permeable membranes and the consequential premature salting of the dairy product substance. Alternatively or additionally, the liquid may flow through perforations or holes in the membrane.

It is generally preferred that in the packaged dairy product and/or when the membrane is placed in the attached position, there is at least one flow passage between a spacing above the membrane and a spacing below the membrane. Comparably, it is generally preferred that the membrane comprises holes, apertures and/or perforations and/or that there is provided a spacing, distance or flow passage between the membrane and an interior surface of the container.

The container may be placed in an upright position so that the dairy product substance is introduced to be positioned at a bottom end or bottom portion of the container due to gravity. The membrane may be suspended from the dairy product substance in an upwards direction from the dairy product substance and/or may be positioned inside the container. The membrane may be positioned with a substantially plane centre portion, which may be positioned to lie substantially horizontally, or, alternatively, the centre portion may have a curved shape in cross section, specifically so that the centre section comprises a depression for holding the dosed solid substance or in which the dosed solid substance is collected.

The dairy product substance may be a substance for producing cheese, such as white cheese and/or Feta cheese, it may be coagulatable, and/or it may comprise dairy product ingredients such as retentate, rennet and/or cheese culture or a combination or recombination thereof. The solid substance may be a salt, e.g. NaCI. The membrane may comprise of be made from a cellulose-based material, such as paper, and/or it may be permeable or impermeable to liquid. Since the membrane is suspended above the dairy product substance, the membrane will not come into contact with the dairy product substance, which means that it is of no consequence if the membrane is liquid-permeable since liquid will not be able to penetrate the membrane as long as the container is placed in an upright position so that the solid substance dosed on the membrane will not come into contact with the dairy product substance or liquid released from it. The membrane may comprise, be based on or essentially consist of nitrocellulose or cellulose nitrate, polyester, including polyethylene terphtalate, polyurethane, PVC, polyethylene, polypropylene, polystyrene, parchment paper or polymer-based film material. The membrane may be a piece of film material or film laminate, which may comprise one or more of the latter materials. The membrane is preferably substantially impermeable to the solid substance. The membrane may be shaped so as to fit snugly with an interior surface of a sidewall portion of the container.

In the suspended position of the membrane, a centre portion of the membrane may be substantially plane. This plane may be parallel to a plane of a bottom portion of the container and/or it may be positioned substantially horizontally.

The container may comprise a bottom portion for standing on and/or a sidewall portion. The sidewall portion may be connected to and/or integral with the bottom portion. The bottom portion may be substantially rectangular, potentially with rounded corners, and the sidewall portion may accordingly comprise a substantially rectangular sidewall that extends upwards from each of four edges of the substantially rectangular bottom portion and/or with rounded corners. Opposite pairs of these sidewalls may be substantially parallel. The bottom portion may alternatively have a substantially circular or elliptic shape and the side portion may accordingly have a substantially tubular shape extending from the bottom portion. The container may be substantially box-shaped or cubic, potentially with one side removed so as to form an open top. The container may be an open cup or an open tray. The container has an opening, which may be positioned to face upwards during the above method steps. The opening may be defined by upper edges of the said sidewall portion.

The membrane may be of a film material or a film laminate. The membrane may be punched from a sheet of film material or film laminate, preferably before the membrane is suspended within the container.

The distance from which the membrane is suspended above the dairy product substance may be 1 mm to 200 mm, 5 mm to 100 mm, 10 mm to 50 mm or 10 mm to 30 mm. The distance may be so large that the dairy product substance does not come into contact with the membrane and/or the solid substance unless or until the container is potentially moved in order to bring the dairy product substance into contact with solid substance.

The solid substance may be dosed on the membrane before or after the membrane has been positioned in the container and/or before or after the membrane has been attached to the container.

The packaged dairy product may after manufacture be sealed, stored and/or transported to a point of sale to be purchased by an end user or a consumer. If the package is provided with a lid, the end user may remove or peel off the lid to gain access to the contents of the container. The end user may then remove, including potentially peel off, the membrane to thereby gain access to the dairy product. Accordingly, the attachment of the membrane may generally be releaseable from and/or peelable off of the container.

In an embodiment of the first aspect of the invention, the solid substance is dosed onto a centre portion of the membrane so that substantially none of the solid substance enters into the dairy product substance.

In another embodiment the peripheral portion comprises one or more attachment wings positioned peripherally of a centre portion, and the membrane is suspended by attaching the one or more attachment wings to an interior surface of a sidewall portion of the container.

In this embodiment, 1 to 8 or 2 to 6 and preferably four attachment wings may be provided and each attachment wing preferably extends in parallel to the respective sidewall of the sidewall portion to which it is attached. Before the membrane is suspended within the container, the membrane, including attachment wings and centre portion, preferably extends in substantially one plane, whereby it may be punched from a sheet of film material. When the membrane is introduced into the container, the one or more attachment wings may be folded upwardly when they come into contact with an upper edge of the sidewall portion, potentially so as to lie snugly up against different sidewalls of the sidewall portion when the membrane is in the suspended position and potentially so that each attachment wing extends at an angle close to a right angle to the centre portion. The attachment wings may be welded to the sidewall portion, for example by means of spot welds. In case of an oblong attachment wing one spot weld at each end in a longitudinal direction of the attachment wing may be sufficient. 1 to 8, 2 to 6 or 2 to 4 spot welds may be used for each attachment wing. Alternatively, the wings may be attached to the sidewall portion by using welding, gluing or hot melt in points or lines; this may be done in a conventional manner known to a person skilled in the art. An applicator unit with an applicator part shaped according to the end shape of the membrane may guide the membrane into the container. The applicator part of the applicator unit may comprise heat points at positions where the membrane is to be welded to the container. Alternatively, the attachment wings of the membrane may be attached by folding the wings over all or part of an upper edge of the sidewall portion to attach the membrane to the container. Alternatively, the attachment wings of the membrane may be attached by folding the wings over all or part of an upper edge of the sidewall portion to attach the membrane to the container.

Attachment of the membrane may generally be achieved by allowing the membrane to abut an interior surface of the container, i.e. without further adhesive means such as welding. This may especially be achieved if the membrane has such stiffness that it may hold itself in its suspended position.

The attachment wings may extend only along parts of a periphery of the centre portion; for example they may extend along linear parts of the periphery of the centre portion of the membrane. The membrane may have such a shape that when the membrane is placed in the suspended position in the container, there is, at parts of the periphery of the centre portion where no attachment wing is attached, a distance between the peripheral portion of the membrane and an inner surface of the sidewall portion. These parts of the peripheral portion may be positioned at corners of the membrane; for example in embodiments where the membrane centre portion is substantially rectangular. This distance between the membrane and the sidewall portion provides an aperture through which liquid released from the dairy product substance is allowed to flow, for example if the container is turned upside down or otherwise moved. This may allow the liquid to dissolve the solid substance so that the latter will come into contact with the dairy product substance. The solid substance may also be able to flow through this aperture (of which there may be provided several) when the container is moved. Alternatively or additionally, apertures may be punched in the centre section, for example near its periphery. Alternatively or additionally, there is no distance or substantially no distance between the peripheral portion and the container, and the membrane is only attached to the sidewall portion at some positions along the entire peripheral portion of the membrane, whereby liquid or solid substance may be able to flow through between the peripheral portion and the sidewall portion due to flexibility of the membrane and the sidewall portion.

The centre portion of the membrane may be one unbroken section of film material with no holes or perforations, and/or it may extend integrally into the attachment wings. Holes or perforations may be provided at a periphery of the centre section and/or at the transition to the attachment wings, and they may allow flow of liquid or solid substance.

In another embodiment the dairy product substance is an acidifiable substance, the method comprising the further step of allowing the dairy product substance to acidify, whereby liquid is released from the acidified dairy product substance.

In this embodiment the membrane may be attached to the container before the liquid substance coagulates and/or acidifies, e.g. immediately after or 1 second to 10 minutes or 5 seconds to 1 minute after the dairy product substance has been introduced into the container. Similarly, dosing of the solid substance on the membrane may be carried out before the liquid substance coagulates and/or acidifies, e.g. immediately after positioning of the membrane or after 1 second to 10 minutes or 5 seconds to 1 minute after the membrane has been positioned in the container.

Hereby, the membrane may be positioned in the container and the solid substance may be dosed quickly after positioning of the membrane.

The container and its contents may be left or stored until the dairy product substance has acidified, potentially also after having coagulated. The liquid from the acidification may be released 12 to 36 hours, typically about 24 hours, from introducing the dairy product substance into the container.

In a development of the latter embodiment the method comprises the subsequent step of moving or turning the container so that the released liquid comes into contact with the solid substance to at least partly dissolve the solid substance. The dairy product substance may have been left to acidify before the container is moved or turned.

The solid substance may be brought into contact with the dairy product substance after acidification, e.g. the dairy product can be salted in case the solid substance is NaCI. The container may be turned upside down or turned only partly or shaken or shaken gently. Preferably, substantially all the solid substance is dissolved.

The step of moving or turning the container may be carried out 12 to 36 hours, typically about 24 hours, after a lid has been attached to seal the container, which may allow the dairy product substance to acidify and the liquid to be released.

Two or more, typically 20 to 100, sealed containers can be positioned on a pallet or the like, and the entire pallet can be turned upside down in order to mix solid substance and dairy product substance in all the containers at the same time.

In another embodiment the method comprises the further step of attaching a lid to the container above the membrane so as to close the opening and seal the container's contents from the surroundings.

Hereby, the container may be moved or turned without the contents of the container spilling out of the container.

The lid may be welded to an upper edge of the container, the upper edge surrounding the opening. The lid may be sealed and/or welded to an outer rim of the opening; this outer rim being formed by upper edges of a sidewall portion of the container. The lid may be liquid-impermeable and/or gas-impermeable. The lid may alternatively be liquid-impermeable and gas-permeable and/or oxygen-permeable, e.g. for cases in which a packaged cheese should be able to breathe through the lid.

Subsequent to attachment of the lid, the container and its contents may be left or stored until the dairy product substance has coagulated and/or acidified.

The lid may be attached to the container substantially immediately after the solid substance has been dosed or 1 second to 10 minutes or 5 seconds to 1 minute after the solid substance has been dosed. If the membrane is furthermore positioned quickly after introduction of the dairy product substance, and the solid substance is furthermore dosed quickly after positioning of the membrane, as described above, all these steps can be performed in one overall step of manufacture after which the container with contents can be left or stored, potentially until the dairy product substance has coagulated and/or acidified. Furthermore, each step of the method according to the invention can be carried out substantially simultaneously in two or more containers to accordingly manufacture an identical number of packaged dairy products. Accordingly, mass production may be carried out while the containers are positioned on a pallet.

With the present embodiment it may be possible to move the container or turn it upside down to mix the substances within while ensuring that no substance flows out of the container. The lid may be a lid of film material or film laminate, and it may be cut from a sheet of film material before or after being positioned to seal the opening. It may be attached using welding or any other conventional way of sealing containers. It may be attached to the container along an upper edge of a sidewall portion of the container.

A further lid, such as a plastic lid or a further film lid, may be attached to the container afterwards. This further lid may be used as a resealable lid so that the container may be resealed by a user after having pulled off the sealing lid, which can typically not be used to reseal the container. The further lid may be positioned above the sealing lid and may be a plastic lid, it may be a moulded lid, and/or it may be configured to snap into engagement with an upper edge of the sidewall of the container so as to be attached to the container.

In another embodiment the container comprises a sidewall portion with sidewalls that are inclined outwardly from a bottom end in an upward direction towards a top end of the container, the opening being positioned at said top end of the container.

Thus, a transverse distance between oppositely positioned sidewalls of the container increases from the bottom end towards the top end. Hereby, it may be easier to place the membrane in the correct suspended position, especially if the membrane has a transverse extent that is somewhat smaller than the corresponding transverse distance between opposite sidewalls at the top end of the container and somewhat larger than the corresponding transverse distance between opposite sidewalls at the bottom end or at a position at a distance from the top end of the container, whereby the peripheral portion of the membrane, especially if the membrane is provided with some stiffness, will abut interior surfaces of the sidewall portion when the membrane has been introduced into the container to a distance from the top end in which the said transverse extent of the membrane corresponds substantially to the said transverse distance between opposite sidewalls of the container. The part of the sidewalls that extends outwardly in this manner may be provided only at a part of the sidewalls or the sidewall portion; for example only near the top end of the container or a top edge of the sidewall portion. For example, in case of a circular bottom portion, the sidewall portion may be frusto-conical with a larger diameter at the top end (which may be open) than at the bottom end of the container. The angle of inclination of each sidewall compared to a plane of the bottom portion may be 1-10 degrees, 2-8 degrees or 3-7 degrees. All sidewalls of the sidewall portion need not be inclined; for example one or two sidewalls may be inclined.

As an alternative to the inclined sidewalls described above, the sidewalls may extend upwards substantially at a right angle to the bottom portion, and the sidewall portion may, preferably near a top end of the container, comprise a step in the sidewall portion so that a transverse distance between opposite sidewalls is larger above the step than beneath the step, whereby the peripheral portion of the membrane may be supported by an upper surface of the step so as to position the membrane in a suspended position. Thus, the step may form a seat for the positioning and attachment of the membrane in its suspended position. This seat may extend in an entire circumference of the container and may extend 0.1 to 4 mm, 0.5 to 2 mm or 0.5 to 1.5 mm in a transverse direction of the container. The extent may be provided in the entire circumference of the container.

In another embodiment the method comprises the further step of introducing or spraying a liquid into the container and/or flushing the container with a liquid. This step is preferably carried out before the step of introducing the dairy product substance into the container through an opening of the container and before attaching the peripheral portion of the membrane to the container. Hereby, it may be ensured that the dairy product substance, potentially after acidification, will be released from the interior surfaces of the container, potentially when the container is turned upside-down. Accordingly, the liquid may comprise water and/or an oil, such as a vegetable oil, and/or a release agent and/or a solubilizer, preferably a mixture of water, oil and one or more release agents, which may be water soluble. A suitable solubilizer and/or release agent may comprise less than 3 % water and/or may be a co-emulsifier and/or may comprise or consist of a sorbitan fatty acid ester and/or a potentially non-ionic polyoxy-ethylene-(20)-sorbitan monolaurate emulsifier. The release agent may be or comprise TEGO® SML 20 as offered by EVONIK INDUSTRIES as of 7 January 2014. The step of releasing the dairy product may be carried out in a conventional manner known to a person skilled within the art of feta cheese manufacture.

In another embodiment the membrane comprises a base layer of a non-weldable material and a weld layer of weldable material.

In a development of this embodiment, the weld layer comprises a pattern of a weldable material so that some areas of a surface of the base layer are covered with the weldable material and some areas of the surface of the base layer are not covered with the weldable material.

The membrane according to this embodiment may be manufactured by the method according to the third aspect of the invention, and/or it may be a membrane according to the fourth aspect of the invention. Advantages associated therewith are explained below.

In this embodiment the membrane may be attached to the container, potentially to an interior surface of a sidewall of the container, in the ways explained above. It may thus, e.g., be attached using spot welds, and referring to the below, this may be achieved, e.g., using a raster distribution of the weldable material on the base layer.

Alternatively, a pattern of weldable material may be distributed only at welding points, i.e. points where it is intended to weld the membrane to the container. In another alternative, at each of the welding areas, each welding area potentially being slightly larger than the weld itself at the welding point, a substantially fully covering welding material lacquer may be applied. An advantage of applying weldable material in this manner is that sufficient amount of weldable material can easily be applied. Also, permeability of the membrane is hardly affected. However, a disadvantage may be that for every shape of container and membrane a tool for applying the weldable material has to be produced, and cutting the membranes has to be performed in register to ensure the weldable material is positioned where the sealing tool is positioned. This may significantly increase both production costs and, also, error rates since there is a larger risk that the spot welding to some degree misses the areas provided with weldable material, thus weakening the resultant weld.

In an alternative development of the present embodiment the membrane comprises a base layer of a non-weldable material and a weld layer of weldable material, wherein the weld layer covers substantially an entire surface of the base layer. In this development no pattern of weldable material need be provided, i.e. all areas of the surface of the base layer may be covered with the weldable material.

In an alternative or additional development of the present embodiment the membrane comprises or has been punched or cut from a film, film laminate, sheet or sheet laminate comprising a base sheet layer onto which a tie layer and a welding layer have been coextrusion coated. Especially in the above described embodiment comprising the further step of releasing the dairy product substance from interior surfaces of the container, it has been shown that it is possible to weld through a liquid with which the container has been flushed or sprayed to thereby provide sufficient weld adherence of the membrane to the walls of the container.

In this development, such a sheet laminate may comprise a base sheet layer and an additional sheet layer, which comprises at least one tie layer and a welding layer, the at least one tie layer being disposed between the base sheet layer and the welding layer. The tie layer may comprise polyolefin. The welding layer may comprise or essentially consist of polypropylene (PP) or polyester, such as polyethylene terephthalate (PET) so as to suit welding to a container comprising PP or PET, respectively. In case the welding layer comprises PP, the welding layer may comprise or essentially consist of a PP/poly-ethylene (PE) compound blend or a PP/PE dry blend. The base sheet layer may comprise or substantially consist of polyester, specifically PET or OPET.

In case the welding layer comprises PP, the additional layer may comprise two tie layers. In this case, especially in case the base sheet layer is metallized, the tie layer facing the base sheet layer may comprise or essentially consist of a copolymer containing or based on ethylene acrylic acid (EAA) co-polymer and/or ethylene methacrylic acid (EMAA) (especially in case of the base sheet layer having a metal or metallized surface facing the tie layer) and/or maleic acid anhydride (MAH) and/or polyethylene acrylate. Especially in case the base sheet layer is not metallized, the tie layer facing the base sheet layer may comprise or essentially consist of a copolymer containing or based on MAH and/or polyethylene acrylate. Additionally, or alternatively, the tie layer facing the welding layer may comprise or essentially consist of a copolymer containing or based on MAH and/or polyethylene acrylate and/or ethylene vinyl acetate (EVA).

In case the welding layer comprises PP, the additional layer may alternatively comprise one single tie layer. In this case, the tie layer may comprise or essentially consist of a copolymer containing or based on MAH and/or polyethylene acrylate and/or ethylene vinyl acetate (EVA).

With these options a suitably strong adhesion may be achieved between a container of PP, PET and/or PE or comprising a PP, PET and/or PE welding surface and the welding layer. Additionally, a split peel may be achieved during peeling off of the membrane when opening the container to gain access tho its contents, i.e. the welding layer will remain on the container while a controlled delamination occurs between the tie layer and the welding layer. This split peel may occur substantially only in a welding zone, i.e. the zone of the membrane where the membrane has been welded to the container. The force required and/or desired to delaminate will typically be 5 to 12 N per 15 mm. This force can be varied by varying the thickness of the welding layer. However, to avoid curl of the membrane, the thickness of the welding layer should preferably be kept small. A coextrusion coated additional layer may provide a membrane that is stronger than a corresponding sheet laminate with a base sheet layer provided with welding lacquer, thereby allowing the thickness of the base sheet layer to be reduced correspondingly, which may achieve saving of weight and material of 15 % or more compared to a comparable sheet laminate using welding lacquer.

One purpose of the tie layer is to promote adherence between the welding layer and the base sheet layer. The tie layer or each tie layer may comprise two or more layers formed for example in the coextrusion coating process, wherein the layer, which is adjacent to or faces the base sheet layer, provides adherence to the base sheet layer and the layer which is adjacent to or faces the welding layer provides adherence to the welding layer.

All layers may be distributed to have substantially uniform thickness or planar weight across substantially an entire planar extent of the sheet or membrane.

The base sheet layer of the sheet laminate or membrane has a first major surface which faces the tie layer and an opposite second major surface, which second major surface may be an outer major surface for facing the lid when a lid has been applied to the container. It is noted that the base sheet layer may comprise further layers such as a metallized layer, a barrier coating and/or a protection layer forming part of the base sheet layer. These layers may be provided on either one of the two major surfaces of the base sheet layer. The base sheet layer with the optional metallized layer, barrier coating and/or protection layer may be manufactured in a first, separate process before the additional layer of the sheet laminate is coextrusion coated thereon.

The base sheet layer may comprise or essentially consist of polyester, specifically polyethylene terephtalate (PET), more specifically oriented, potentially biaxially oriented, PET (OPET), or can be a film comprising or essentially consisting of Al or of polyamide (PA), especially oriented polyamide (OPA). The base sheet layer may be a separately extruded or coextruded layer.

The thickness of the base sheet layer, specifically in the case where it comprises or essentially consists of PET or OPET, may be between 20 and 50 µm, preferably between 30 and 40 µm, and more preferred between 34 and 38 µm.

The thickness of the welding layer and/or the tie layer may be less than 50 µm, preferably less than 50 µm, more preferred less than 45 µm, more preferred equal to or less than 40, 35, 30 or 25 µm. The thickness of the tie layer and/or welding layer is preferably above 2, 3, 4 or 5 µm.

The accumulated thickness of the additional layer may be equal to or less than 50 µm, preferably equal to or less than 45 µm, more preferred equal to or less than 40, 35, 30, 25, 20, 15 or 13 µm, and/or the area distribution thereof may be equal to or less than 50 g/m2, preferably equal to or less than 45 g/m2, more preferred equal to or less than 40, 35, 30, 25, 20, 15 or 13 g/m2. This thickness is preferably equal to or above 2, 3, 4, 5, 6, 7, 8, 9, 10 or 11 µm, and/or the area distribution thereof is preferably equal to or above 2, 3, 4, 5, 6, 7, 8, 9, 10 or 11 g/m2.

The thickness of the welding layer may be equal to or less than 10 µm, preferably equal to or less than 8 µm, more preferred equal to or less than 7, 6, 5 or 4 µm, and/or the area distribution thereof may be equal to or less than 10 g/m2, preferably equal to or less than 8 g/m2, more preferred equal to or less than 7, 6, 5 or 4 g/m2. This thickness is preferably equal to or above 0.5, 1 or 2 µm, and/or the area distribution thereof is preferably equal to or above 0.5, 1 or 2 g/m2. It has been shown that low or no curling of a membrane pre-punched from a sheet may be achieved with a welding layer of such low thickness while still achieving suitably strong welding properties.

The thickness of the tie layer, in case only a single tie layer is present, may be equal to or less than 20 µm, preferably equal to or less than 18 µm, more preferred equal to or less than 16, 14, 13, 12, 11 or 10 µm, and/or the area distribution thereof may be equal to or less than 20 g/m2, preferably equal to or less than 18 g/m2, more preferred equal to or less than 16, 14, 13, 12, 11 or 10 g/m2. This thickness is preferably equal to or above 4, 5, 6, 7 or 8 µm, and/or the area distribution thereof is preferably equal to or above 4, 5, 6, 7 or 8 g/m2.

In case two tie layers are present, the thickness of the tie layer facing the base sheet layer may be equal to or less than 10 µm, preferably equal to or less than 9 µm, more preferred equal to or less than 8, 7, 6, 5, or 4 µm, and/or the area distribution thereof may be equal to or less than 10 g/m2, preferably equal to or less than 8 g/m2, more preferred equal to or less than 8, 7, 6, 5, or 4 g/m2. This thickness is preferably equal to or above 0.5, 1 or 2 µm, and/or the area distribution thereof is preferably equal to or above 0.5, 1 or 2 g/m2.

In case two tie layers are present, the thickness of the tie layer facing the welding layer may be equal to or less than 15 µm, preferably equal to or less than 13 µm, more preferred equal to or less than 12, 11, 10, 9, 8 or 7 µm, and/or the area distribution thereof may be equal to or less than 15 g/m2, preferably equal to or less than 13 g/m2, more preferred equal to or less than 12, 11, 10, 9, 8 or 7 g/m2. This thickness is preferably equal to or above 2, 3, 4 or 5 µm, and/or the area distribution thereof is preferably equal to or above 2, 3, 4 or 5 g/m2.

An extrusion primer, potentially water or non-water based, may be applied to the base sheet layer between the base sheet layer and the tie layer, specifically before the coextrusion coating of the additional layer. The primer may be applied to the base sheet layer immediately before, i.e. 0 to 20, 1 to 10 or 2 to 7 seconds before, the step of coextrusion coating. In some embodiments, no primer is present. By choosing proper compositions of the layers, the sheet laminate may be manufactured with sufficient adhesion between the layers without the need for additional layers such as primer layers.

The tie layer may be positioned to coincide directly with, e.g. directly with the PET or OPET of, the base sheet layer.

Especially in the case where the base sheet layer is a metal layer, such as of aluminium, or where the base sheet layer is metallized on the surface facing the tie layer(s), it may not be necessary to apply a primer on the surface of the base sheet layer facing the adjacent tie layer since adherence to the base sheet layer to the adjacent tie layer will typically be satisfactory. Thus, the tie layer may be positioned to coincide directly with, e.g. directly with the PET or OPET of, the base sheet layer.

A primer layer, of which use is thus especially relevant for non-metalic surfaces, may essentially consist of a substantially water soluble or a substantially water insoluble primer and may be selected from the group consisting of:
- a polyurethane (PU) based primer, preferably with reactive isocyanate groups,
- a polyurethane/polyvinyl buthylene (PvB) based primer,
- a polyurethane/nitrocellulose (NC) based primer,
- a hotmelt primer based on UV hardening technology,
- a polyethylenimine based primer or
- a combination of the above.

The primer may be a water-based, modified polyethylenimine, single-compontent resin dispersion extrusion primer, such as MICA A-31-X as offered by MICA CORPORATION as of October 19, 2016.

Other primer types may also be suitable.

During manufacture, the primer layer may be applied directly onto said first major surface, the additional sheet layer subsequently being coated directly onto the primer.

The primer may be solvent-based, so as to be non-soluble in water, or water-based.

The enhanced adhesion between the base sheet layer and the additional layer achieved by using a primer layer may allow delamination to be controlled during opening of a package or container with a membrane punched or cut from the sheet laminate.

One or all of the starting materials of the additional layer may be in the form of or comprise granulate or granules.

The base sheet layer may comprise at least 50 % by weight of polyester, PET, OPET, PA, OPA or aluminium, preferably at least 60, 70, 80, 90 or 95 % by weight or substantially 100 % by weight. The base sheet layer may comprise small amounts of additional materials such as anti-block agents, release agents and the like. The base sheet layer may comprise a colouring agent and may be white or another colour. The base sheet layer may comprise one or more colouring agents to make the resultant membrane partly or completely non-transparent or opaque.

No further layer(s) need be provided on the base sheet layer top major surface. No further layer(s) need be provided beneath the welding layer, i.e. on a bottom surface of the welding layer. In some embodiments, no further layers are included in the sheet laminate or membrane besides the base sheet layer and the additional layer, and in some embodiments the additional layer only comprises at least one tie layer, such as one or two tie layers, and the welding layer. In some embodiments the tie layer or each of the tie layers and the welding layer are only one single layer, i.e. they comprise no sublayers. Preferably, the additional layer comprises only the tie layer(s) and the welding layer, but other layers may be present, such layers potentially being coextrusion coated together with the tie layer(s) and the welding layer. In some embodiments, only materials for providing an improved adhesion are provided between the layers of the sheet laminate.

The base sheet layer and/or the additional layer and/or the tie layer(s) and/or the welding layer and/or the sheet laminate and/or the membrane may be transparent and/or translucent and/or may allow at least 10 %, 25 %, 50 %, 60 %, 70 %, 80 %, 90 %, 95 % or substantially 100 % of visible light to pass through. Alternatively, the base sheet layer and/or the tie layer(s) and/or the sheet laminate and/or the membrane may be opaque, i.e. allowing substantially no visible light transmission through it. In the context of the present specification the term "transparent" is intended to mean that when the sheet laminate is applied as a lid of a container, it has an optical transparency high enough to allow the contents of the resultant package to be visually inspected when the product is presented in normal light conditions, such as on a shelf in a supermarket.

The tie layer may comprise at least 50 % by weight polyolefin, preferably at least 60, 70, 80, 90 or 95 % by weight or substantially 100 % by weight. A polyolefin may be defined as the class of polymers produced from a simple olefin (also called an alkene with the general formula CnH2n) as a monomer. For example, PE is the polyolefin produced by polymerizing the olefin ethylene. PP is another common polyolefin which is made from the olefin propylene. The polyolefin may be, comprise or substantially consist of a thermoplastic polyolefin and/or a poly-α-olefin. The degrees of crystallinity of the polyolefin may be above 60 %, 70 %, 80 % or 90 %. The polyolefin may be, comprise or substantially consist of PE or may alternatively or additionally be, comprise or consist of PP. The polyolefin, including e.g. PE and/or PP, may be in the form of a homo-polymer or a co-polymer of the polyolefin.

The tie layer may be, comprise or consist of a PE containing acrylate or methyl acrylate. The acrylate or methyl acrylate content may be equal to or above 10, 15 or 20 weight %. The tie layer may additionally or alternatively be, comprise or consist of a PE containing anhydride or maleic anhydride. The anhydride or maleic anhydride content may be equal to or above 0.1, 0.2 or 0.3 weight %. The tie layer may be, comprise or consist of a terpolymer of ethylene, acrylic ester and or maleic anhydride. The melt index (190°/2.16kg) of the tie layer may alternatively or additionally be 5 to 10 g/10 min measured according to the standard ISO 1133/ASTM 1238. The tie layer may be, comprise or consist of Lotader 4503 as marketed by Arkema in January 2015. The tie layer may be, comprise or consist of an ethylene vinyl acetate (EVA) and/or ethylene acrylic acid (EAA), both potentially containing PE. The tie layer may be a mixture of the above examples.

The welding layer may comprise at least 50 % by weight PP, PET or PE, preferably at least 60, 70, 80, 90 or 95 % by weight or substantially 100 % by weight.

Generally, two or more tie layers may be included. Especially in the case of a metallized base sheet layer, it may be preferred to include two tie layers.

Any and all of the above options regarding compositions, thicknesses etc. of the different layers may be combined.

The membrane may be punched from a sheet laminate. The membrane is preferably pre-punched, i.e. punched or cut before attachment to the container. The method according to the invention may further comprise the step of attaching the punched membrane to the container in advance of or after pre-punching the membrane. The step of attaching the membrane may include arranging the membrane such that the welding layer is facing an attachment surface of the container.

The container or a welding layer on the container may comprise at least 50, 60, 70, 80, 90, 95 % or substantially 100 % PET, PP or PE, and/or the material thereof may be substantially identical to that of the welding layer of the membrane.

It can be determined from a sheet laminate comprising a base sheet layer and a coextrusion coated additional sheet layer as described in the above since the additional sheet layer will in that case adhere to the base sheet layer without a separate adhesive layer being provided between the two layers. Accordingly, there need not be a separate adhesive layer or glue layer that includes a hardener or a hardening agent/component, present between the additional sheet layer and the base sheet layer. An adhesive or glue layer that includes a hardener or a hardening agent/component may be defined as a layer that comprises or essentially consists of a two-component adhesive or a two-component glue such as a polyurethane (PU) based adhesive/glue, available from, for example, Henkel AG, Coim Spa or Dow Chemical. Alternatively, it can be immediately determined from a sheet laminate that the additional sheet layer has been coextrusion coated onto the base sheet layer since in that case the sheet laminate will have very small curl compared to if it were manufactured in any other manner, see further below regarding curl.

In another embodiment of the sheet laminate or membrane, the magnitude of curl K of the sheet laminate or membrane measured according to ISO 11556:2005(E), second edition 2005, is equal to or less than 10 m⁻¹, and/or the chord-to-arc distance h of the sheet laminate measured according to ISO 11556:2005(E), second edition 2005, is equal to or less than 20 mm.

The value K is preferably equal to or less than 9, 8, 7, 6, 5, 4, 3, 2, 1 ,0.5, 0,1, 0.05, 0.01, 0.005 or 0.002 m⁻¹. Alternatively, or additionally, the value h of the sheet laminate is preferably equal to or less than 50, 30, 15, 12, 10, 9, 8, 7, 6, 5, 4, 3, 2, 1 or 0.5 mm.

The determination of the values K and/or h is generally done using the standard ISO 11556:2005(E), second edition 2005 (which is hereby incorporated by reference).

Coextrusion coated sheets that may be suitable in the present context are described in WO 2013 075713 A1 (applying PET as the welding layer) and WO 2011 160627 A1 (applying PP as the welding layer).

In an alternative to the present development the membrane may be similar to the previously described development, the single difference being that the coextruded additional layer has been replaced by a welding lacquer, which may potentially be applied in conventional manner to potentially have the same characteristics as the above described extruded welding layer. The welding lacquer may comprise or essentially consist of PP, PET or polyethylene (PE).

The above and further objects of the invention may also be solved or alleviated by the second aspect of the invention, which provides a packaged dairy product, specifically packaged white cheese, comprising:
a container with an opening,
a detachable lid covering and sealing the opening,
a dairy product packaged inside the container, and
a membrane positioned inside the container, a peripheral portion of the membrane being attached to the container so that the membrane is suspended above the dairy product.

The packaged dairy product according to the second aspect of the invention may be manufactured according to the method of the first aspect of the invention and may include a similar membrane. A person skilled in the art will realize that the above advantages described with respect to the first aspect of the invention will also be or may also be achieved with the packaged dairy product substance according to the second aspect of the invention.

The packaged dairy product may have been manufactured from a coagulatable dairy product substance. The container may also contain liquid, which may potentially have been released during acidification of the dairy product substance.

When a sealing, detachable lid is provided to seal the opening, during manufacture the container may be moved or turned without the contents of the container spilling out of the container.

The lid may be welded to an upper edge of the container, the upper edge surrounding the opening. The lid may be sealed and/or welded to an outer rim of the opening; this outer rim being formed by upper edges of a sidewall portion of the container. The lid may be liquid-impermeable and/or gas-impermeable.

The lid may be a lid of film material or film laminate, and it may be cut from a sheet of film material before or after being positioned to seal the opening. It may be attached using welding or any other conventional way of sealing containers. It may be attached to the container along an upper edge of a sidewall portion of the container.

A further lid, such as a plastic lid or a further film lid, may be attached to the container. This further lid may be used as a resealable lid so that the container may be resealed by a user after having pulled off the sealing lid, which can typically not be used to reseal the container. The further lid may be positioned above the sealing lid and may be a plastic lid, it may be a moulded lid, and it may be configured to snap into engagement with an upper edge of the sidewall of the container so as to be attached to the container.

In another embodiment the dairy product comprises a dissolved solid substance.

The dissolved solid substance may be salt, specifically NaCI.

In another embodiment the peripheral portion comprises one or more attachment wings positioned peripherally of a centre portion of the membrane, and the membrane is suspended by attachment of the one or more attachment wings to an interior surface of a sidewall portion of the container.

Comparable to that described above in connection with the first aspect of the invention regarding the membrane, 1 to 8 or 2 to 6 and preferably four attachment wings may be provided and each attachment wing preferably extends in parallel to the respective sidewall of the sidewall portion to which it is attached. The membrane may have been punched from a sheet of film material. The one or more attachment wings may be folded upwardly so that they are in contact with an upper edge of the sidewall portion, potentially so as to lie snugly up against different sidewalls of the sidewall portion and potentially so that each attachment wing extends at an angle close to a right angle to the centre portion. The attachment wings may be welded to the sidewall portion, for example by means of spot welds. In case of an oblong attachment wing one spot weld at each end in a longitudinal direction of the attachment wing may be sufficient. 1 to 8, 2 to 6 or 2 to 4 spot welds may be used for each attachment wing. Alternatively, the wings may be attached to the sidewall portion by using welding, gluing or hot melt in points or lines; this may be done in a conventional manner known to a person skilled in the art.

Alternatively, the attachment wings of the membrane can be folded over all or part of an upper edge of the sidewall portion to attach the membrane to the container.

The attachment wings may extend only along parts of a periphery of the centre portion; for example they may extend along linear parts of the periphery of the centre portion of the membrane. The membrane may have such a shape that when the membrane is placed in the suspended position in the container, there is, at parts of the periphery of the centre portion where no attachment wing is attached, a distance between the peripheral portion of the membrane and an inner surface of the sidewall portion. These parts of the peripheral portion may be positioned at corners of the membrane; for example in embodiments where the membrane centre portion is substantially rectangular. This distance between the membrane and the sidewall portion provides an aperture through which liquid released from the dairy product substance is allowed to flow, for example if the container is turned upside down or otherwise moved. The solid substance may also be able to flow through this aperture (of which there may be provided several) when the container is moved. Alternatively or additionally, apertures may be punched in the centre section, for example near its periphery. Alternatively or additionally, there is no distance or substantially no distance between the membrane and the container along the entire peripheral portion, and the membrane is only attached to the sidewall portion at some positions along the entire peripheral portion of the membrane, whereby liquid or solid substance may be able to flow or sieve between the peripheral portion and the sidewall portion due to flexibility of the membrane and the sidewall portion. In case the membrane is substantially rectangular to fit with a substantially rectangular container, the membrane may comprise cut off corners to provide the distance between the peripheral portion and the sidewall portion. Each attachment wing may have a substantially rectangular shape.

The centre portion of the membrane may be one unbroken section of film material with no holes or perforations, and it may extend integrally into the attachment wings. Holes or perforations may be provided at a periphery of the centre section or at the transition to the attachment wings, and they may allow flow of liquid or solid substance.

In another embodiment the container comprises a sidewall portion with sidewalls that are inclined outwardly from a bottom end in an upward direction towards a top end of the container, the opening being positioned at said top end of the container.

Similar to as previously described, hereby, a transverse distance between oppositely positioned sidewalls of the container increases from the bottom end towards the top end. Hereby, during manufacture it may be easier to place the membrane in the correct suspended position, especially if the membrane has a transverse extent that is somewhat smaller than the corresponding transverse distance between opposite sidewalls at the top end of the container and somewhat larger than the corresponding transverse distance between opposite sidewalls at the bottom end or at a position at a distance from the top end of the container, whereby the peripheral portion of the membrane, if the membrane is provided with some stiffness, will abut interior surfaces of the sidewall portion when the membrane has been introduced into the container to a distance from the top end in which the said transverse extent of the membrane corresponds substantially to the said transverse distance between opposite sidewalls of the container. The part of the sidewalls that extends outwardly in this manner may be provided only at a part of the sidewalls or the sidewall portion; for example only near the top end of the container or a top edge of the sidewall portion. For example, in case of a circular bottom portion of the container, the sidewall portion may be frusto-conical with a larger diameter at the top end (which may be open) than at the bottom end of the container. The angle of inclination of each sidewall compared to a plane of the bottom portion may be 1-10 degrees, 2-8 degrees or 3-7 degrees. All sidewalls of the sidewall portion need not be inclined; for example one or two sidewalls may be inclined while still achieving the above effect.

As an alternative to the inclined sidewalls described above, the sidewalls may extend upwards substantially at a right angle to the bottom portion, and the sidewall portion may, preferably near a top end of the container, comprise a step in the sidewall portion so that a transverse distance between opposite sidewalls is larger above the step than beneath the step, whereby the peripheral portion of the membrane may be supported by an upper surface of the step so as to position the membrane in a proper suspended position. Thus, the step may form a seat for the positioning of the membrane in its suspended position. This seat may extend in an entire circumference of the container and may extend 0.1 to 4 mm, 0.5 to 2 mm or 0.5 to 1.5 mm in a transverse direction of the container. The latter extent may be provided in the entire circumference of the container.

In another embodiment the membrane comprises a base layer of a non-weldable material and a weld layer of weldable material, the weld layer comprising a pattern of a weldable material so that some areas of a surface of the base layer are covered with the weldable material and some areas of the surface of the base layer are not covered with the weldable material.

The membrane according to this embodiment may be manufactured by the method according to the third aspect of the invention, and/or it may be a membrane according to the fourth aspect of the invention. Advantages associated herewith are described above in connection with the first aspect of the invention and below in connection with the third and fourth aspects of the invention.

The membrane may be attached to the container, potentially to an interior surface of a sidewall of the container, for example in the ways explained above. It may thus, e.g., be attached using spot welds, and referring to the below, this may be achieved, e.g., using a raster distribution of the weldable material on the base layer. Alternatively, a pattern of weldable material may be distributed only at welding points, i.e. points where it is intended to weld the membrane to the container. In another alternative, at each of the welding areas, each area potentially being slightly larger than the weld itself at the welding point, a substantially fully covering welding material lacquer may be applied.

The above and further objects of the invention may also be met by the third aspect of the invention providing a method for the manufacture of a weldable membrane for use in the first and/or second aspect of the invention, comprising the steps of:
providing a base layer of a non-weldable material,
applying a weldable material in a pattern on a surface of the base layer to provide a weld layer of weldable material on the base layer,
wherein said pattern is applied so that some areas of a surface of the base layer are covered with the weldable material and some areas of the surface of the base layer are not covered with the weldable material.

With the method according to the third aspect of the invention, a membrane may thus be manufactured, which is especially suitable for use in the method according to the first aspect of the invention and in the packaged dairy product according to the second aspect of the invention. As explained in the above, it may be of advantage if the membrane is liquid-permeable since liquid-permeable membranes are typically manufactured from more environmentally friendly and cheaper materials. With the method according to the third aspect of the invention, a liquid-permeable membrane may be manufactured, which is directly weldable to the container used in the first and second aspects of the invention since the weldable material applied to the base layer can be used in the welds. The weldable material used in a membrane manufactured according to the third aspect of the invention need only be provided in a very small fraction of the amount needed in a liquid-impermeable membrane.

The base layer may alternatively or additionally be gas-permeable. Hereby, the membrane will be permeable to gas, such as oxygen, specifically in those areas of the base layer that are not covered by the weldable material. This may be of advantage in case the membrane is used for the packaging of products, for example a cheese type, such as Brie, which should be able to breathe through the membrane. Such packaging may be in the form of a cup or tray where a lid of the cup or tray is the said membrane and thus is breathable, or it may be so that the membrane is wrapped around the product and potentially welded upon itself. The membrane can also be used for other types of products where it is desired or at least not unwanted that the membrane is permeable, and where it is desired that the membrane is weldable.

The weldable material may be applied to the base layer in liquid form. After applying the weldable material, the weldable material may be allowed to dry and/or harden to form the weld layer of the weldable membrane.

The weldable material can be provided in the form of a lacquer that is applied on or directly onto the base layer. A layer of for example primer material or coating of the base layer may be provided between the base layer and the weld layer. The weld layer can be applied using flexographic printing, also known as flexo printing, or gravure printing. The lacquer can be applied in different patterns, e.g. in circular spots, and the weldable material can be diluted in solvents or water or supplied as an emulsion where droplets of the weldable material is equally distributed in a liquid, i.e. substantially without being diluted. After the application on the base layer the solvent or water from the lacquer or emulsion may evaporate so only the solid material in the weldable material is remaining.

The weldable material can potentially be applied as a pattern, which may cover the entire base layer, and may be applied in dots, which may be substantially circular in shape. The pattern may be a so-called raster pattern, which may be applied using raster application known within the arts of printing and packaging. In a raster pattern the weldable material may be applied in dots in a homogeneous pattern with substantially equally sized dots with substantially equal distances between them, e.g. in a grid pattern with the dots distributed in lines in width and length dimensions of the base layer.

In case a raster pattern is applied, in between the dots of weldable material substantially no weldable material is applied. The dots may be very small. The percentage of the surface of the base layer, which is covered by the weldable material is sometimes referred to as raster% or raster percentage, i.e. the percentage of the entire surface area covered with the weldable material. By having many small dots within a small area, heat points of a sealing tool or an applicator unit may come into contact with a sufficient amount of spots to ensure the sealing/adhesion.

An advantage of using a raster pattern as described is that the entire surface area of the membrane can be made weldable and sealable, while retaining liquid-permeability or gas-permeability of the base layer. An advantage of applying a homogeneous pattern, such as a raster pattern, is that membranes of different sizes and shapes can be produced from the same sheet of material since there are no welding spots, but rather the entire surface is weldable. Furthermore, cutting or punching membranes from a larger starting sheet does not need to be performed in register, whereby the costs for tooling and requirements for expensive control systems on the production machines can be avoided.

A part of the surface of 20 % to 60 % or 30 % to 50 %, or 30 to 40 or 32 to 38, alternatively 15 % to 80 % or even down to 10 % and above 80 %, may be covered with the weldable material; in the case of raster appliance, the raster percentages correspond to these percentages. If the membrane is used in the method according to the invention for the manufacture of a packaged dairy product, a raster percentage of 30 to 40 or 32 to 38 provides a suitable peelability for when the membrane is to be peeled off by an end user. The weld layer can have a thickness of 0.05 to 10 µm or 0.1 to 2 µm or 0.1 to 1 µm or 0.2 to 0.5 µm, typically about 0.3 µm. This may be compared to liquid-impermeable membranes of plastic material, such as polypropylene, which typically have a thickness of 30 to 40 µm. Furthermore, since only a portion of the surface of the base layer is covered with the weldable material, the amount of weldable material used according to the third aspect of the invention can be only a very small fraction of that used in the above described fourth known method.

A raster pattern may be applied in a raster grid or raster register so that dots or spots of weldable material are positioned in lines so that 20 to 80 or 34 to 60 lines of dots are positioned within each 1 cm in each of two main directions of the base sheet, e.g. a width and a length direction. For example, a square centimetre may comprise 40 x 40 lines, which is 1600 dots per square centimetre. The raster grid may, depending on the application type, comprise up to more than 100 lines within each cm, which can be achieved using gravure printing.

The base layer may, for example, be based on, comprise or essentially consist of paper or other permeable cellulose-based material, which may be gas-permeable or liquid-permeable. The paper may have been produced by pressing together moist fibres of cellulose pulp derived from wood, rags or grasses, and drying them into flexible sheets. The base layer or paper layer may have a thickness corresponding to a planar distribution of 10 to 80 g/m² or 40 to 60 g/m². The thickness of the base layer may be substantially constant over an entire planar extent of the base layer. Comparably, thickness of the weld layer may be substantially constant over an entire planar extent of the weld layer in the areas of the base layer surface, which are covered with the weldable material.

The weldable material may be adapted to be weldable to the material to which it is to be welded. If it is to be welded to a container, the weldable material may be adapted to weld to the material of the container. The weldable material may comprise, be based on or essentially consist of nitrocellulose, cellulose nitrate, polyester, including polyethylene terphtalate, polyurethane, PVC, polyethylene, polypropylene or polystyrene.

With the method according to the third aspect of the invention, weldable paper or other base layer material with only a very small amount of weldable material thereon may be conveniently manufactured.

The above and further objects of the invention may also be met according to the fourth aspect of the invention providing a weldable membrane for use in the first and/or second aspect of the invention, comprising a base layer of a non-weldable material and a weld layer of weldable material, the weld layer comprising a pattern of a weldable material so that some areas of a surface of the base layer are covered with the weldable material and some areas of the surface of the base layer are not covered with the weldable material.

The weldable membrane may be manufactured according to the method of the third aspect of the invention.

A person skilled in the art will realize that advantages similar or comparable to those described above in connection with the third aspect of the invention may be achieved with the fourth aspect of the invention.

The membrane according to the fourth aspect of the invention is especially suitable for use in the method according to the first aspect of the invention and in the packaged dairy product according to the second aspect of the invention. As explained in the above, it may be of advantage if the membrane is liquid-permeable, and the base layer may also or additionally be gas-permeable.

The weldable material may have been applied in the form of a lacquer that is applied on or directly onto the base layer. A layer of for example primer material or coating of the base layer may be provided between the base layer and the weld layer. The weld layer may have been applied using flexographic printing, also known as flexo printing, or gravure printing. The lacquer can be applied in different patterns, e.g. in circular forms, and the weldable material can contain solvents and/or may have been applied as an emulsion where droplets of the weldable material is equally distributed in a liquid, i.e. substantially without being diluted. After the application on the base layer the solvent or water from the lacquer or emulsion may have evaporated so only the solid material in the weldable material is remaining.

The weldable material can potentially be distributed in a pattern, which may cover the entire base layer, and may comprise dots or spots of weldable material, which may be substantially circular in shape. The pattern may be a so-called raster pattern, which may have been applied using raster application known within the arts of printing and packaging. In such a raster pattern the weldable material may be distributed in dots in a homogeneous pattern with substantially equally sized dots with substantially equal distances between them, e.g. in a grid pattern with the dots distributed in lines in width and length dimensions of the base layer.

In case the weldable material is distributed in a raster pattern, in between the dots of weldable material substantially no weldable material is provided. The dots may be very small.

A part of the surface of 20 % to 60 % or 30 % to 50 %, or 30 to 40 or 32 to 38, alternatively 15 % to 80 % or even down to 10 % and above 80 %, may be covered with the weldable material; in the case of raster distribution, the raster percentages correspond to these percentages. If the membrane is used in the method according to the first aspect of the invention, a raster percentage of 30 to 40 or 32 to 38 provides a suitable peelability for when the membrane is to be peeled off by an end user. The weld layer can have a thickness of 0.05 to 10 µm or 0.1 to 2 µm or 0.1 to 1 µm or 0.2 to 0.5 µm, typically about 0.3 µm.

A raster pattern may be applied in a raster grid or raster register so that dots or spots of weldable material are positioned in lines so that 20 to 80 or 34 to 60 lines of dots are positioned within each 1 cm in each of two main directions of the base sheet, e.g. a width and a length direction. For example, a square centimetre may comprise 40 x 40 lines, which is 1600 dots per square centimetre. The raster grid may, depending on the application type, comprise up to more than 100 lines within each cm, which can be achieved using gravure printing.

The base layer may, for example, be based on, comprise or essentially consist of paper or other permeable cellulose-based material, which may be gas and/or liquid-permeable. The paper may have been produced by pressing together moist fibres of cellulose pulp derived from wood, rags or grasses, and drying them into flexible sheets. The base layer or paper layer may have a thickness corresponding to a planar distribution of 10 to 80 g/m² or 40 to 60 g/m². The thickness of the base layer may be substantially constant over an entire planar extent of the base layer. Comparably, thickness of the weld layer may be substantially constant over an entire planar extent of the weld layer, i.e. in the areas of the base layer surface, which are covered with the weldable material.

The weldable material may be adapted to be weldable to the material to which it is to be welded. If it is to be welded to a container, the weldable material may be adapted to weld to the material of the container. The weldable material may comprise, be based on or essentially consist of nitrocellulose, cellulose nitrate, polyester, including polyethylene terphtalate, polyurethane, PVC, polyethylene, polypropylene or polystyrene. The same materials may generally be used in the container of the first and second aspects of the invention.

The base layer may be lacquered in a known manner using a raster cliche transmitting lacquer to a rubber cliche that transfers the weldable material to the base layer. The raster roller may accordingly be formed with a suitable number of dots per square centimetre, e.g. 40 x 40 dots. The raster roller runs partially dipped into a container with lacquer, and excessive lacquer is scraped off before transmitting the lacquer to the rubber roller. Upon transmittal to the rubber roller, the lacquer forms little dots, partially covering the rubber roller. The dots may widen approximately 1 to 2 % on the rubber roller before they are transferred to the base layer to partially cover the base layer. The portion of the base layer surface covered with the weldable material can range from a minimum typically at about 10% to achieve sufficient attachment of the membrane when welded to the container.

The membrane according to the fourth aspect of the invention may take the form of weldable paper or other base layer material with only a very small amount of weldable material thereon.

### The drawings

In the enclosed schematic drawings:
Figs 1a to 1e show side views of a container, illustrating different subsequent steps of a prior art method for the manufacture of a packaged dairy product.
Figs 2a to 2d show side views of a container, illustrating different subsequent steps of another prior art method for the manufacture of a packaged dairy product.
Figs 3a to 3e show side views of a container, illustrating different subsequent steps of a method for the manufacture of a packaged dairy product according to the first aspect of the present invention, Fig. 3e showing an end product in the form of a packaged dairy product according to the second aspect of the invention.
Fig. 4 shows an elevated view of an embodiment of a membrane according to the fourth aspect of the invention for use in the method of Figs 3a to 3e.
Fig. 5 shows an elevated view of another embodiment of a membrane according to the fourth aspect of the invention for use in the method of Figs 3a to 3e.
Fig. 6 shows an elevated view of an embodiment of a container for use in the method of Figs 3a to 3e.
Fig. 7 shows an elevated view of the container of Fig. 6 to which the membrane of Fig. 4 has been attached.
Figs 8 to 10 show side views corresponding to those of Figs 3a to 3e of different alternative embodiments of a container for use in the method according to Figs 3a to 3e.
Fig. 11 shows a method for the manufacture of the membrane according to Fig. 4 or Fig. 5.
Figs 11a and 11b show details of Fig. 11.
Fig. 11c shows a detail of Fig. 11b in a side view.

### Detailed description of embodiments of the invention

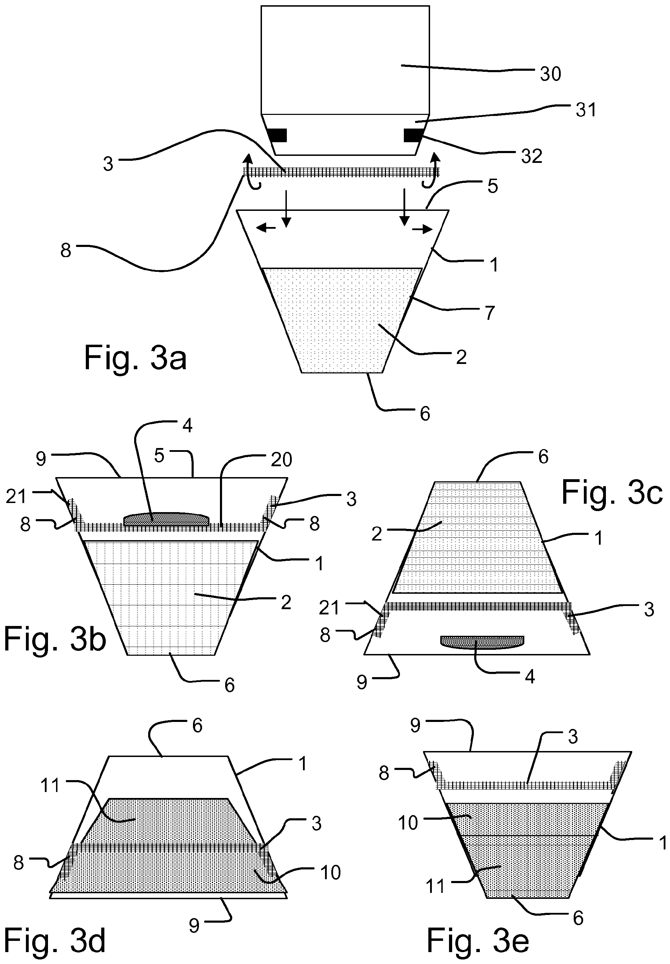

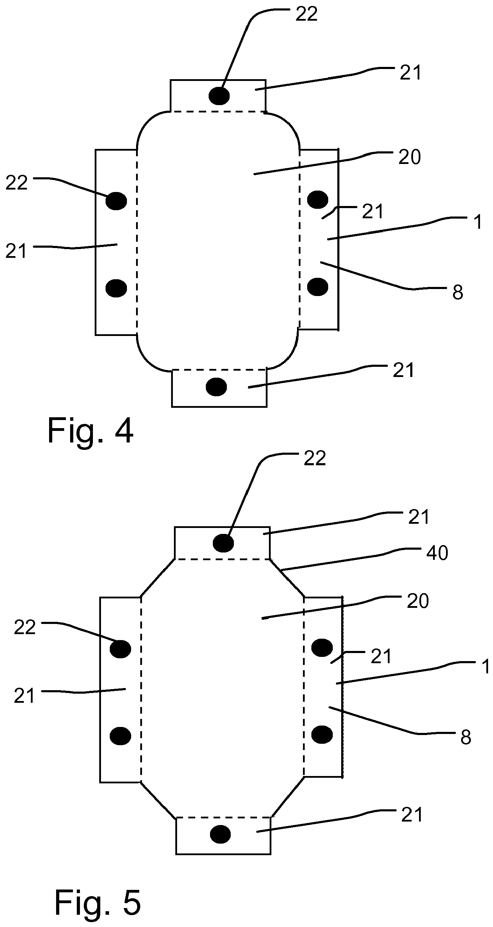

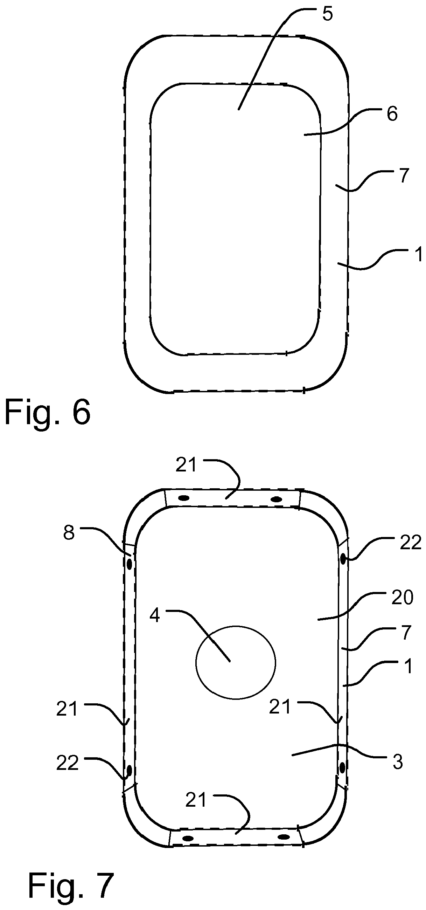

Figs 3a to 3e illustrate an embodiment of a method according to the first aspect of the present invention for the manufacture of a packaged dairy product, the packaged dairy product being shown in Fig. 3e. The resultant dairy product is a piece of white cheese or Feta cheese 11, see Fig. 3e. Figs 4 and 5 show different embodiment of a membrane, which may be used in the method, Fig. 6 shows a container, which may be used in the method, and Fig. 7 shows the container of Fig. 6 with the membrane of Fig. 4 positioned therein.

In the following the method will be described with reference to Figs 3a to 7.

First, a liquid, coagulatable, acidifiable dairy product substance 2 is introduced, specifically poured, into a container 1 positioned in an upright position through an opening 5 at an open top end of the container 1, Fig. 3a showing the substance 2 positioned within the container 1. Subsequently a peripheral portion of a liquid-permeable membrane 3 is attached to the container 1 so as to suspend the membrane 3 above the substance 2. In Fig. 3b the membrane 2 is shown in the suspended position, and a solid substance in the form of salt (NaCI) 4 has been dosed onto a top surface of the membrane 3 so that the membrane holds the salt 4 at a distance from the substance 2 in the container 1 so that the salt 3 does not come into contact with the substance 2. A lid 9 has been attached to an upper rim of the container to seal the opening 5. The substance 2 is then left to coagulate. In Fig. 3c the container 1 and its contents has after coagulation of the substance 2 been rotated 180 degrees so that a bottom portion 6 of the container 1 now faces upwards, and the salt 4 has dropped to lie on an upper or interior surface of the bottom portion 6. In Fig. 3c the coagulated substance 2 now adheres due to coagulation to interior side surfaces of a sidewall portion 7 of the container 1 so that it is held at the reversed bottom of the container 1. In Fig. 3d acidification of the substance 2 has occurred, and the acidified substance or cheese, now denoted 11, has dropped onto the membrane 3, which is still attached to the container 1. Liquid 10 has been released from the substance 2 during acidification and now has dropped to the reversed top end of the container 1. The liquid 10 has thus entered a volume between the lid 9 and the membrane 3 through the membrane 3 and between interior surfaces of the sidewall 7 and a peripheral portion 8 if the membrane 3. Hereby, the salt 4 has been dissolved in the liquid 11. In Fig. 3e the container 1 has been rotated 180 degrees once again to assume the initial upright position of Figs 3a and 3b. The salted liquid 10 is in contact with the cheese 11, which is hereby salted.

Processing time is short since the steps of introduction of the membrane 3, attachment of the membrane 3 in the container 1 and dosing of the solid substance 4 can be carried out immediately or very quickly after each other, and the container's opening 5 can be immediately closed and sealed with a lid 6 after dosing of the solid substance 2.

The membrane 3 is in the attached position placed with a substantially plane centre portion 20 positioned to lie substantially horizontally. A plane of the centre portion 20 is parallel to a plane of the bottom portion 6 of the container 1 and it is thus positioned substantially horizontally.

In Figs 3a, 3b and 3e the container 1 stands with the bottom portion 6 abutting on a fixed surface, such as of a pallet or a table.

The dairy product substance 2 is substance for producing white cheese or Feta cheese, it is coagulatable, and it comprises dairy product cheese ingredients such as retentate, rennet and/or cheese culture or a combination or recombination thereof.

The membrane 3 is punched a sheet of film before being attached to the container 1. The membrane is substantially impermeable to the solid substance 4 as long as the substance 4 is in its solid form.

The container 1 is a tray and is shown in more correct details in the elevated view of Fig. 6. The bottom portion 6 and sidewall portion 7 are connected to and are integral with each other. The container 1 is a moulded tray with an open top end. As can be seen in Fig. 6, the bottom portion 6 is substantially rectangular with rounded corners, and the sidewall portion 7 accordingly comprises a, when seen from the elevated view of Fig. 6, substantially rectangular sidewall portion that extends upwards from each of four edges of the substantially rectangular bottom portion 6 and also has rounded corners. Opposite pairs of sidewalls of the sidewall portion 6 are substantially parallel. The opening 5 is defined by upper edges of the sidewall portion 7.

The distance from which the membrane 3 is suspended above the substance 2 in Fig. 3c is approximately 10 mm.

The packaged dairy product shown in Fig. 3e is after manufacture stored and transported to a point of sale to be purchased by an end user or a consumer. The end user may remove or peel off the lid 9 to gain access to the contents of the container 1. The end user may then remove, including potentially peel off, the membrane 3 to thereby gain access to the dairy product or cheese 11.

As can be seen in Fig. 3b and Fig. 7, the salt 4 is dosed onto the centre portion 20 of the membrane 3 so that substantially none of the solid substance enters into the dairy product substance. Specifically, the salt 4 is dosed at a centre of the centre portion 20, see Fig. 7.

The membrane of Fig. 4 is shaped so as to fit snugly with an interior surface of the sidewall portion 7 of the container 1.

The peripheral portion 8 of the membrane 3 comprises four attachment wings 21 positioned peripherally of the centre portion 20, and the membrane 3 is suspended by attaching the one or more attachment wings 20 to the interior surface of the sidewall portion 7 of the container 1, see Fig. 7. One wing 21 is provided on each of four linear edges of the centre portion 20. Each attachment wing 21 extends in parallel to the respective sidewall of the sidewall portion 7 to which it is attached. Before the membrane is suspended within the container 1, the membrane 3, including attachment wings 21 and centre portion 20, extends in substantially one plane as shown in Figs 3a, 4 and 5, whereby the membrane 3 may be punched from a sheet of film material.

When the membrane 3 is introduced into the container 1, the four attachment wings 21 are folded upwardly when they come into contact with the upper edge of the sidewall portion 7, see Figs 3a, 3b and 7, so as to lie snugly up against different sidewalls of the sidewall portion 7 when the membrane 3 is in the suspended position and so that each attachment wing 21 extends at an angle close to a right angle to the centre portion 20, see Figs 3b and 7.

The attachment wings 21 are welded to the sidewall portion by means of spot welds 22. The attachment wings 21 are shaped to be oblong, and one spot weld 22 is made at each end in a longitudinal direction of the attachment wing 21, see Figs 4 and 7. Note that the spot weld have not been made yet in the view of Figs 4 and 5, only the positions for the spot welds are marked in the Figures. Thus, two spot welds 22 are used for each attachment wing 21.

As shown in Fig. 3a, an applicator unit or tool 30 with an applicator part 31 shaped according to the shape of the membrane 3 positioned in the container 1 guides the membrane 3 into the container 1. The applicator part 31 comprises heat points 32 at positions where the membrane 3 is to be spot-welded to the container 1. The applicator unit 30 moves downwards as shown with arrows in Fig. 3a until it abuts the membrane 3. When the applicator part 31 enters through the opening 5, the wings 21 are bent upwards to lie in parallel with respective sidewalls of the sidewall portion 7. This folding of the wings 21 is illustrated with the uppermost, bent arrows in Fig. 3a.

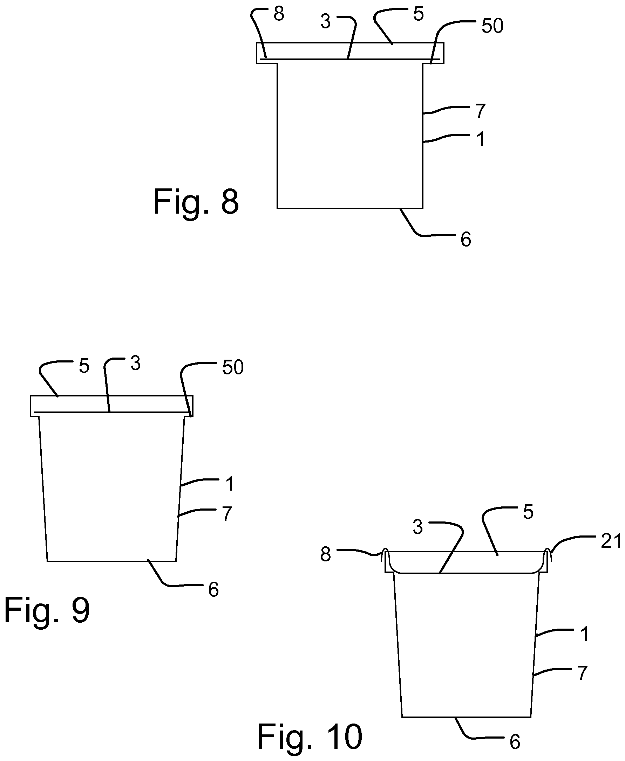

Alternatively, as is also shown in the alternative embodiment of the container in Fig. 10, the attachment wings 21 of the membrane 3 can be folded over all or part of the upper edge of the sidewall portion 7 to attach the membrane 3 to the container 1.

The attachment wings 21 extend only along parts of a periphery of the centre portion 20, specifically along the linear sides of the periphery of the centre portion 20.

The membrane 3 in Fig. 4 has such a shape that it corresponds to the interior surface of the container 1 so that when the membrane 3 is placed in the suspended position in the container 1 there is no or only a small distance between the membrane 3 and the sidewall portion 7, see Fig. 7.

The centre portion 20 of the membrane 3 is one unbroken section of film material with no holes or perforations, and it extends integrally into the attachment wings 21.

Fig. 5 shows an alternative embodiment of the membrane 3 shown in Fig. 4. The membrane 3 of Fig. 5 has been modified so that there is, at parts of the periphery of the centre portion 20 where no attachment wing 21 is attached, a distance between the peripheral portion 8 of the membrane 3 and an inner surface of the sidewall portion 7. These parts of the peripheral portion 8 are positioned at corners of the membrane 3, specifically by cutting off the corners in a linear cut, see at reference 40 in Fig. 5. This distance between the membrane 3 and the sidewall portion 7 provides an aperture through which the liquid 10 released from the substance 2 is allowed to flow when the container 1 is turned upside down.

The container 1 and its contents are stored in the position of Fig. 3c until the dairy product substance 2 has acidified. The liquid 10 from the acidification may be released 12 to 36 hours, typically about 24 hours, from introducing the dairy product substance 2 into the container 1.

Two or more, typically 20 to 100, sealed containers 1 as shown in Fig, 3b can be positioned on a pallet or the like (not shown), and the pallet can be turned upside down in order to mix salt 4 and the substance 2 in all the containers at the same time.

The lid 9 is welded to an upper edge of the container 1, the upper edge surrounding the opening 5, see Fig. 3b. The lid 9 is sealed by welding to the edge of the opening 5. The lid 9 is liquid-impermeable and/or gas-impermeable. The lid 9 is attached to the container 1 substantially immediately after the salt 4 has been dosed on the membrane 3. The membrane 3 is similarly positioned immediately after introduction of the substance 2 into the container 1, and the salt is dosed immediately after positioning of the membrane 3 so that these steps can be performed in one overall step of manufacture after which the container 1 with contents can be stored. In case of several containers 1 positioned on a pallet as described above, each step of the method can be carried out substantially simultaneously in two or more containers to accordingly manufacture an identical number of packaged dairy products. Accordingly, mass production may be carried out while the containers are positioned on the pallet.

The lid 9 ensures that no substance flows out of the container 1 during movement or rotation thereof.

A further lid (not shown) in the form of a moulded plastic lid is attached to the packaged dairy product shown in Fig. 3e. This further lid is used as a resealable lid so that the container 1 may be resealed by the end user after having pulled off the sealing lid 9, which can typically not be used to reseal the container 1. The further lid is positioned above the sealing lid 9 and is configured to snap into engagement with the upper edge of the sidewall portion 7 of the container 1 so as to be attached to the container 1.

As can be seen in Figs 3a to 3c and Figs 6 and 7, the sidewall portion 7 has sidewalls that are inclined outwardly from the bottom portion 6 in the upward direction towards the top end of the container 1 so that a transverse distance between oppositely positioned sidewalls of sidewall portion 7 increases from the bottom portion 6 towards the top end. Also, as can be seen by comparing Figs 4 and 5 with Fig. 7, the membrane 3 has a transverse extent that is somewhat smaller than the corresponding transverse distance between opposite sidewalls at the top end of the container 1 and somewhat larger than the corresponding transverse distance between opposite sidewalls at the bottom portion 6, whereby the peripheral portion 8 of the membrane 3 will abut interior surfaces of the sidewall portion when the membrane 3 is introduced into the container 1 as shown in Fig. 3a to the position shown in Fig. 3b at distance from the top end in which the said transverse extent of the membrane 3 corresponds substantially to the said transverse distance between opposite sidewalls of the container 1. Hereby, the wings 21 will be folded upwards as described. The angle of inclination of each sidewall compared to a plane of the bottom portion 6 is somewhat exaggerated in Figs 3a to 3c and is, in practice about 4 degrees.

Fig. 8 shows an alternative container 1 in which the sidewalls are not declined as described above. Instead, the sidewalls extend upwards substantially at a right angle to the bottom portion 6, and the sidewall portion 7 near a top end of the container 1 comprises a step 50 in the sidewall portion 7 so that a transverse distance between opposite sidewalls is larger above the step than beneath the step, whereby the peripheral portion 8 of the membrane 3 is supported by an upper surface of the step 50 so as to position the membrane 3 in the suspended position. Thus, the step 50 forms a seat for the membrane 3 in its suspended position. This step or seat 50 extends about 1 mm in a transverse direction of the container 1 in the entire circumference of the container 1.

Fig. 9 shows a modified version of the container 1 of Fig. 8 in which the sidewall portion 7 is inclined similar to the container 1 in the embodiment of Figs 3a to 3c, 6 and 7.

Fig. 10 shows a modified version of the container 1 of Fig. 9 where the membrane 3 is attached to the container 1 in a manner where the peripheral portion 8 or the wings 21 extend to and are folded over an upper edge of the sidewall 7. In this embodiment, the transverse dimensions of the membrane 3 are thus somewhat larger than the opening 5 so that the wings 21 may extend over the upper edges of the sidewall portion 7. The peripheral portion 8 of the membrane 3 may be welded to an exterior surface of the sidewall 7 by spot welds or along the entire upper edge of the sidewall portion 7. The lid 9 of the previous embodiments is not shown in Fig. 10, but may be attached or welded directly to the membrane 3 near the upper edge of the sidewall portion 7 or to the exterior surface of the container 1 at a position beneath the peripheral portion 8.

The membrane 3 comprises a base layer of paper and a weld layer of weldable material. The weld layer comprises a pattern of weldable material so that some areas of a surface of the base layer are covered with the weldable material and some areas of the surface of the base layer are not covered with the weldable material, see further below.

The membrane 3 is manufactured by an embodiment of the method according to the third aspect of the invention, and it is an embodiment of the membrane according to the fourth aspect of the invention.

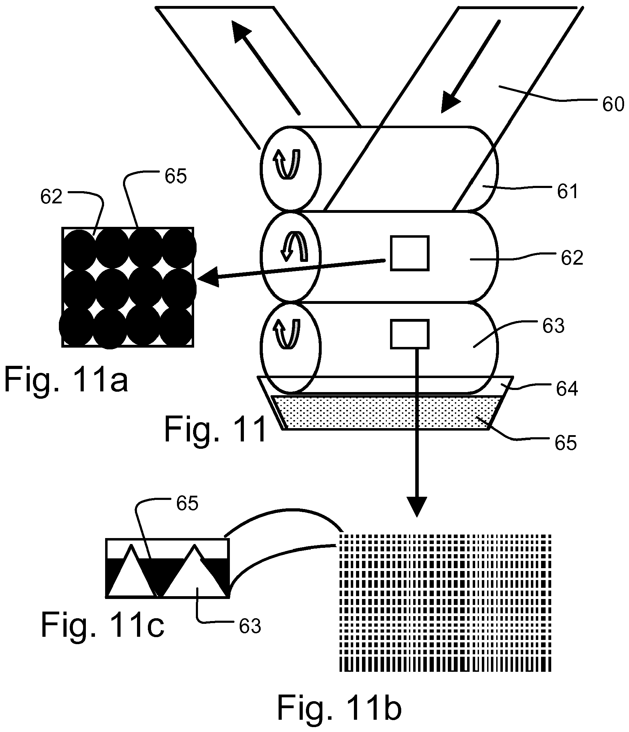

The method for manufacture of the membrane 3 using flexo print is illustrated in the schematic view of Fig. 11 of which details are shown in Figs 11a and 11b. A detail of Fig. 11b is shown in Fig. 11c.

As is shown in Fig. 11, a sheet of base material 60 is provided as a base layer of the membrane 3. The base material 60 is of a non-weldable material, specifically paper.

A weldable material provided at the outset as a lacquer 65 supplied from a container 64 is applied in a pattern on a surface of the base material 60 to provide a weld layer of weldable material on the base material 60 and thus the base layer. The pattern is applied so that some areas of a surface of the base material 60 are covered with the lacquer 65 and some areas of the surface of the base material 60 are not covered with the lacquer 65.

The base material 60 is lacquered in a known manner using a raster cliché or raster roller 63 transmitting lacquer 65 to a rubber cliché or rubber roller 62 that transfers the lacquer 65 to the base material 60, which is brought forward between the rubber roller 62 and a pressure roller 61 along the arrows shown in Fig. 11. Arrows drawn on end surfaces of the rollers 63, 62 and 61 in Fig. 11 show the rolling direction of each roller 63, 62 and 61. The rubber roller 62 transmits a print of the lacquer 65 to the base material 60. The raster roller 63 is a lined raster roller known as an anilox roller.

The raster roller 63 may accordingly be formed with a suitable number of dots per square centimetre, e.g. 40 x 40 dots with a total of 1600 dots per square centimetre, see Fig. 11b. The raster roller 63 runs partially dipped into the container 64 with lacquer 65, and excessive lacquer 65 is scraped off (not shown) before transmitting the lacquer 65 to the rubber roller 62. Upon transmittal to the rubber roller 62, the lacquer 65 forms small dots, see Fig. 11a, partially covering the rubber roller 62. The dots may widen approximately 1 to 2 % on the rubber roller before they are transferred to the base material 60 to partially cover the base material 60. The portion of the base material 60 surface covered with the lacquer 65 can range from a minimum of typically about 10% to achieve sufficient attachment of the membrane 3 when welded to the container 1.

Fig. 11b shows a detail of a surface of the raster roller 63 in which the small amounts of lacquer 65 are received in small depressions in the surface of the raster roller 63. Fig. 11c shows the lacquer 65 held in the depressions. Fig. 11a correspondingly shows a detail of a surface of the rubber roller, showing the pattern of the lacquer 65 applied from the raster roller 63 onto the rubber roller 62. As can be seen, the lacquer form small circular dots positioned in register. A similar pattern of lacquer 65 is applied onto the base material 60, and the resultant membrane 3 comprises a similar pattern of weldable material.

After applying the lacquer 65 to the base material 60, the lacquer 65 is allowed to dry to form the weld layer of the membrane 3.

The lacquer 65 can be applied in different patterns, e.g. in circular spots as shown in Fig. 11a, and the lacquer 65 may be diluted in solvents or water or supplied as an emulsion. After the application on the base material 60 the solvent or water from the lacquer 65 evaporates so only the solid material in the lacquer 65 remains and forms the weld layer on the membrane 3.

The lacquer is applied as a pattern, which covers substantially the entire base material 60. The lacquer is applied in dots in a homogeneous raster pattern with substantially equally sized dots with substantially equal distances between them, specifically a grid pattern with the dots distributed in lines in width and length dimensions of the base material, see Figs 11a and 11b. In between the dots of lacquer 65, substantially no lacquer 65 is applied. By having many small dots within a small area, the heat points 32 of the applicator unit 30 shown in Fig. 3a comes into contact with a sufficient amount of spots to ensure the adhesion of the membrane 3 to the container 1.

By applying a raster pattern as described, the entire surface area of the membrane 3 is made weldable and sealable while retaining liquid-permeability of the base layer.

The membrane 3 is cut or punched from the resultant base material 60 provided with the raster pattern of weldable material in the shape shown in Fig. 4 or the shape shown in Fig. 5. Punching several membranes 3 from the larger sheet of base material 60 need not be performed in register.

A part of the surface of about 34 % is covered with the lacquer 65, corresponding to a raster percentage of 34. The resultant weld layer of the membrane 3 has a thickness of about 0.3 µm. The raster pattern is applied in a raster grid or raster register, see Figs 11b and 11a so that dots or spots of weldable material are printed with 40 lines of dots within each 1 cm in each of two main directions of the base material 60, e.g. a width and a length direction. One square centimetre thus comprises 40 x 40 lines or 1600 dots per square centimetre.

The base material 60 and thus the base layer have a thickness corresponding to a planar distribution of about 50 g/m². The thickness of the base material 60 and the base layer is substantially constant over an entire planar extent of these. Comparably, the thickness of the weld layer is substantially constant over an entire planar extent of the weld layer in the areas of the base layer surface, which are covered with the weldable material.

The weldable material of the membrane 3 is weldable to the material of the container 1. The weldable material of the membrane 3 and the lacquer 65 may comprise, be based on or essentially consist of nitrocellulose, cellulose nitrate, polyester, including polyethylene terphtalate, polyurethane, PVC, polyethylene, polypropylene or polystyrene.

## Claims

1. A method for the manufacture of a packaged dairy product, specifically white cheese, comprising the steps of:
introducing a dairy product substance into a container through an opening of the container,
subsequently attaching a peripheral portion of a membrane to the container so as to suspend the membrane above the dairy product substance, and
dosing a solid substance onto a top surface of the membrane so that the membrane holds the solid substance at a distance from the dairy product substance in the container.

2. A method according to claim 1, wherein the solid substance is dosed onto a centre portion of the membrane so that substantially none of the solid substance enters into the dairy product substance.

3. A method according to claim 1 or 2, wherein the peripheral portion comprises one or more attachment wings positioned peripherally of a centre portion, and the membrane is suspended by attaching the one or more attachment wings to an interior surface of a sidewall portion of the container.

4. A method according to any one of the previous claims, wherein the dairy product substance is an acidifiable substance, the method comprising the further step of allowing the dairy product substance to acidify, whereby liquid is released from the acidified dairy product substance.

5. A method according to claim 4, wherein the method comprises the subsequent step of moving or turning the container so that the released liquid comes into contact with the solid substance to at least partly dissolve the solid substance.

6. A method according to any one of the previous claims, wherein the method comprises the further step of attaching a lid to the container above the membrane so as to close the opening and seal the container's contents from the surroundings.

7. A method according to any one of the previous claims, wherein the container comprises a sidewall portion with sidewalls that are inclined outwardly from a bottom end in an upward direction towards a top end of the container, the opening being positioned at said top end of the container.

8. A method according to any one of the previous claims, wherein the membrane comprises a base layer of a non-weldable material and a weld layer of weldable material, the weld layer comprising a pattern of a weldable material so that some areas of a surface of the base layer are covered with the weldable material and some areas of the surface of the base layer are not covered with the weldable material.

9. A packaged dairy product, specifically packaged white cheese, comprising:
a container with an opening,
a detachable lid covering and sealing the opening,
a dairy product packaged inside the container, and
a membrane positioned inside the container, a peripheral portion of the membrane being attached to the container so that the membrane is suspended above the dairy product.

10. A packaged dairy product according to claim 9, wherein the dairy product comprises a dissolved solid substance.

11. A packaged dairy product according to claim 9 or 10, wherein the peripheral portion comprises one or more attachment wings positioned peripherally of a centre portion, and the membrane is suspended by the attachment of the one or more attachment wings to an interior surface of a sidewall portion of the container.

12. A packaged dairy product according to any one of claims 9 to 11, wherein the container comprises a sidewall portion with sidewalls that are inclined outwardly from a bottom end in an upward direction towards a top end of the container, the opening being positioned at said top end of the container.

13. A packaged dairy product according to any one of claims 9 or 12, wherein the membrane comprises a base layer of a non-weldable material and a weld layer of weldable material, the weld layer comprising a pattern of a weldable material so that some areas of a surface of the base layer are covered with the weldable material and some areas of the surface of the base layer are not covered with the weldable material.

14. A method for the manufacture of a weldable membrane for use in the method according to any one of claims 1 to 8 and/or for use in the packaged dairy product according to any one of claims 9 to 13, comprising the steps of:
providing a base layer of a non-weldable material,
applying a weldable material in a pattern on a surface of the base layer to provide a weld layer of weldable material on the base layer,
wherein said pattern is applied so that some areas of a surface of the base layer are covered with the weldable material and some areas of the surface of the base layer are not covered with the weldable material.

15. A weldable membrane for use in the method according to any one of claims 1 to 8 and/or for use in the packaged dairy product according to any one of claims 9 to 13, comprising a base layer of a non-weldable material and a weld layer of weldable material, the weld layer comprising a pattern of a weldable material so that some areas of a surface of the base layer are covered with the weldable material and some areas of the surface of the base layer are not covered with the weldable material.
